# EUROPÄISCHE PATENTSCHRIFT

(11) **EP 0 679 231 B1**
(45) Veröffentlichungstag und Bekanntmachung des Hinweises auf die Patenterteilung: **11.09.1996**
(21) Anmeldenummer: 94905034.8
(22) Anmeldetag: 11.01.1994
(51) Int. Cl.: F16D 7/08, F16D 7/04

(54) **ÜBERLASTKUPPLUNG**
OVERLOAD CLUTCH
ACCOUPLEMENT DE SURCHARGE

(30) Priorität: 15.01.1993 DE 4300952
(43) Veröffentlichungstag der Anmeldung: 02.11.1995
(73) Patentinhaber: Chr. Mayr GmbH & Co. KG, D-87665 Mauerstetten (DE)
(72) Erfinder: VOGL, Norbert, D-83543 Rott (DE)
(74) Vertreter: Ruschke, Hans Edvard, Dipl.-Ing.
(86) Internationale Anmeldenummer: EP9400067
(87) Internationale Veröffentlichungsnummer: WO9416237

(56) Entgegenhaltungen:
- CH-A- 87 260
- DE-A- 2 544 919
- DE-A- 4 005 678
- DE-B- 1 237 851
- DE-U- 9 300 422
- FR-A- 2 078 731
- GB-A- 717 388
- US-A- 1 883 164
- US-A- 3 134 997
- US-A- 3 608 686
- US-A- 5 005 684
- PATENT ABSTRACTS OF JAPAN vol. 8, no. 244 (M-337) 9. November 1984 & JP,A,59 121 233 (SHII KEE DEI) 13. Juli 1984
- PATENT ABSTRACTS OF JAPAN vol. 15, no. 307 (M-1143) 6. August 1991 & JP,A,03 113 126 (TSUBAKIMOTO) 14. Mai 1991

## Beschreibung

Die Erfindung betrifft eine Überlastkupplung mit den Merkmalen des Oberbegriffs des Patentanspruches 1.

Die JP-A-3 113 126 zeigt eine gattungsgemäße Überlastkupplung, bei der es um die Spielfreiheit in Umfangsrichtung geht. Sie besitzt kugelförmige Drehmoment-Übertragungskörper, die in schrägliegende Nuten eingelegt sind und außen mit walzenförmigen Drehmoment-Übertragungskörpern zusammenwirken. Die Vorspannung von den die Drehmoment-Übertragungskörper belastenden Tellerfedern kann durch eine mit einer Feststellschraube versehene Einstellschraube bestimmt werden. Eine zwangsläufige Festlegung auf den fallenden Bereich der Tellerfederkennlinie ist nicht vorgesehen.

Aus der DE-OS 30 48 090 ist eine drehmomentbegrenzende Sicherheitskupplung bekannt, bei der Tellerfedern durch eine verschraubbare Stellmutter abgestützt sind zur Anpassung der Sicherheitskupplung eine größere oder kleinere Anzahl von Tellerfedern eingesetzt werden kann. Nach dem Einstellen des Auslösedrehmoments ist die Stellmutter durch eine Madenschraube feststellbar.

Die DE-OS 23 41 781 zeigt eine Kupplung zur Übertragung eines begrenzten Drehmomentes mit mehreren, paarweise konzentrisch angeordneten Schraubendruckfedern, die in axiale Bohrungen eines Deckels eingelegt sind, der in axialer Richtung durch eine mit einem Gewinde versehene Buchse verstellt werden kann. Die Buchse legt sich rückwärts an einen Sprengring an, der ihre Bewegung nach außen begrenzt.

Nach der US-PS 30 12 456 wird ein Drehmomentschlüssel zum Aufziehen von Schrauben mit einem Gehäuse ausgestattet, in dem eine Anzahl Tellerfedern über eine Hülse auf das Werkzeug einwirkt. Die Einstellung der Tellerfedern wird durch einen Deckel bewirkt, der auf dem Gehäuse mittels Gewinde in axialer Richtung verstellt wird. Auf den Tellerfedern befinden sich unter rückseitiger Anlage an der inneren Stirnwand des Deckels Scheiben, durch die die Verstellung des Deckels auf die Tellerfedern übertragen wird. Auf dem Umfang des Deckels ist eine in axialer Richtung zeigende Marke angebracht, die zusammen mit einer auf dem Mantel des Gehäuses vorgesehenen Skala die Verstellung des Deckels anzeigt. Sowohl die Anordnung der Scheiben als auch die der Anzeigenvorrichtung eignet sich nicht für eine Überlastkupplung der speziellen von der Erfindung als bekannt vorausgesetzten Bauart.

Bei den bekannten Überlastkupplungen gibt es Schwierigkeiten in der Handhabung, die zu Unsicherheiten im Betrieb führen. Diese Schwierigkeiten bestehen darin,
- daß die Einstellmutter zu weit auf die Federanordnung zu verstellt werden kann, was zum Blockieren der Federanordnung führt, so daß die Kupplung nicht mehr richtig anspricht,
- daß bei Verwendung einer Tellerfeder-Anordnung, die eine Kennlinie hat, die mit dem Federweg zunächst ansteigt, dann abfällt und schließlich wieder ansteigt, nur der absteigende Ast ausgenutzt werden darf, damit beim Ansprechen der Kupplung sofort das Drehmoment abfällt und nicht weiter ansteigt.
- daß die Einstellung anderer Drehmomente und anschließend die Wiederherstellung des ursprünglichen Drehmomentes im Betrieb beim Verwender nur ungenau möglich ist, so daß die Kupplung nicht zuverlässig bei dem gewünschten Drehmoment anspricht,
- daß der Ausgangswert des einzustellenden Drehmomentes nicht eindeutig feststeht, z. B. weil die Ansatzpunkte der Gewinde auf dem einen Kupplungsteil und in der Einstellmutter bei der Herstellung nicht genau festgelegt werden können und auch eine eindeutige Zuordnung des Ausgangswertes zu einer Skala auf der Einstellmutter nicht möglich ist,
wodurch wieder die Genauigkeit der Einstellung des Drehmomentes leidet,
- daß es bei mangelnder Aufmerksamkeit vorkommen kann, daß eine Kupplung dieser Art im ausgerasteten Zustand in Betrieb genommen wird oder nach dem Ausrasten in diesem Zustand verbleibt.
- und daß nicht immer sofort ersichtlich ist, warum die Kupplung ausgerastet ist.

Der Erfindung liegt daher die Aufgabe zugrunde, diesen Schwierigkeiten abzuhelfen und damit die Betriebssicherheit zu erhöhen. Insbesondere kann durch die freie Einstellbarkeit ein vom Hersteller zwingend vorgeschriebener Federkennlinienbereich bzw. überlastbereich versehentlich verlassen werden, was im Betrieb zu Problemen führen kann.

Diese Aufgabe wird erfindungsgemäß mit den kennzeichnenden Merkmalen des Patentanspruchs 1 gelöst. Beiderseits der Einstellmutter sind Anschläge vorgesehen. Damit ist der mögliche Einstellbereich durch diese konstruktiv festgelegten Auschläge auf einen vorgeschriebenen Bereich eingegrenzt.

Nachdem Tellerfedern verwendet werden, ergibt die erfindungsgemäße Anordnung von Anschlägen beiderseits der Einstellmutter den Vorteil, daß mit Sicherheit nur der absteigende Ast der Kennlinie der Tellerfedern ausgenutzt wird.

Weitere vorteilhafte Ausgestaltungen der Erfindung ergeben sich aus den Unteransprüchen.

In der Zeichnung ist ein Ausführungsbeispiel der Erfindung dargestellt und beschrieben.

Es Zeigen:
- Figur 1: einen Längsschnitt durch eine erfindungsgemäße Überlastkupplung,
- Figur 2: eine stirnseitige Ansicht der Einstellmutter,
- Figur 3: die Charakteristik einer Tellerfederanordnung.

Darin bezeichnen 1 eine Nabe als ersten Kupplungskörper, mit einem Außengewinde 1a und einer flanschförmigen Verdickung 1b als Anschlag. Derselbe kann aber auch ein in eine umlaufende Nut der Nabe 1 eingesetzter Sprengring oder eine auf die Nabe 1 aufgeschraubte, gegen Lösen gesicherte Ringmutter sein. Mit 2 ist ein zweiter Kupplungskörper bezeichnet, der eine axial gerichtete Verzahnung 2a besitzt. 3 stellt einen Druckring dar. 4 ist eine konische Zwischenscheibe, 5 bedeutet einen Einstellring, der auf die Federn zu in einer Hülse ausläuft und ein Innengewinde 5a trägt. Ein Kugellager ist mit 6 beziffert. Es liegt einseitig an einer Schulter der Nabe 1 an und ist an der anderen Seite durch einen Sicherungsring 9 und eine Stützscheibe 8 festgelegt, die an einem Sicherungsring 7 anliegen. Die Drehmoment-Übertragungskörper in Kugelform tragen die Ziffer 10. Eine Federanordnung 11 mit Tellerfedern liegt zwischen dem Zwischenring 4 und dem Druckring 3 an. 12 ist ein farbiger O-Ring auf dem hinteren Ende des Kupplungsteils 2; er ist in eine Ringnut eingelegt und wird im Überlastfall sichtbar. Die Einstellmutter 5 liegt außenseitig an einem in eine Umfangsnut der Nabe 1 eingesetzten Sprengring 13 als Anschlag an. Anstelle dieses Sprengringes 13 kann auch eine flanschförmige Verdickung, oder eine auf die Nabe 1 aufgeschraubte, gegen Lösen gesicherte Ringmutter als Anschlag dienen. 14 sind Ausgleichsscheiben, die zwischen die Einstellmutter 5 und die Zwischenscheibe 4 eingelegt sind. 15 ist die Bezeichnung eines Ringes, der undrehbar fest auf der Nabe 1 sitzt und eine radial gerichtete Verzahnung 15a trägt. Die Einstellmutter 5 kann z. B. durch eine Schraube 16 festgestellt werden. An dem Kupplungsteil 2 ist innenseitig eine Farbmarkierung angebracht, z. B. in Form des farbigen O-Ringes 12 oder eines umlaufenden farbigen Streifens, der im eingerasteten Zustand der Kupplung z. B. vom Druckring 3 überdeckt ist und nur bei ausgerasteter Kupplung sichtbar wird. Als Farbe wird am besten eine Schockfarbe, vorzugsweise rot, oder eine Leuchtfarbe verwendet. Die Skala auf der Einstellmutter 5 trägt die Ziffer 17, sie ist in Prozent des Maximaldrehmomentes gehalten, welches auf einem nicht dargestellten Typenschild der Kupplung vermerkt ist. Ihr steht eine Marke auf der Nabe 1 oder einem mit ihr drehfest verbunden Teil gegenüber. Es ist aber auch möglich, die Skala auf der Nabe 1 oder einem mit ihr drehfest verbundenen Teil und die Marke auf der Einstellmutter 5 anzubringen.

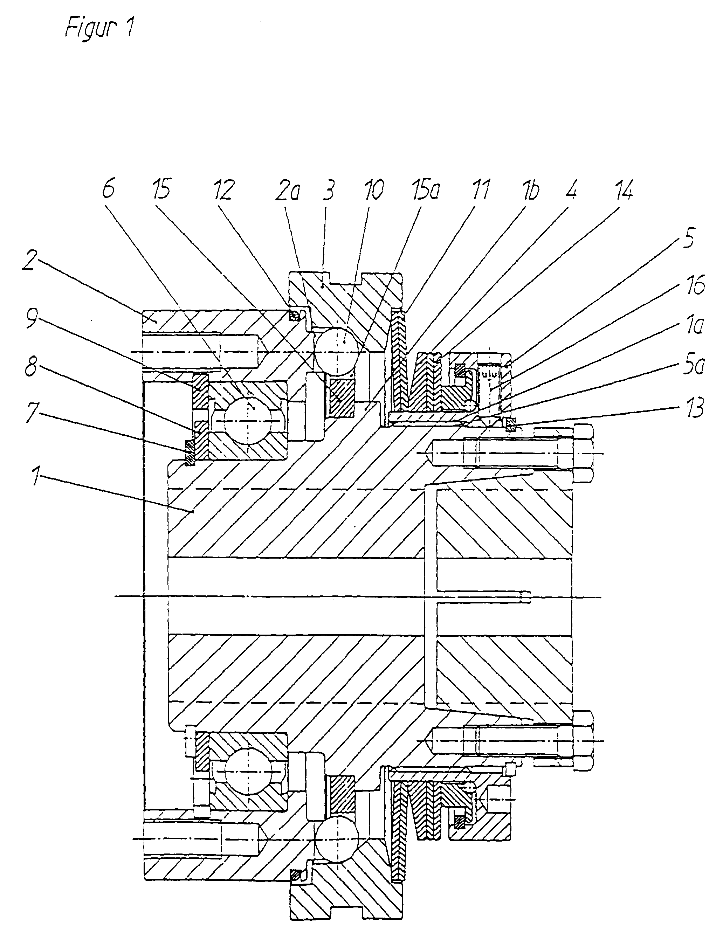

Die dargestellte Kupplung ist nach Figur 1 im eingerasteten Zustand gezeigt, in dem der Druckring 3 durch die Federn 11 nach links gedrängt ist und so die Kugeln 10 gleichzeitig im Eingriff mit den Verzahnungen 2a und 15a hält. So wird das Drehmoment durch die Kugeln 10 übertragen.

Bei Erreichen des eingestellten Ansprech-Drehmomentes wandern die Kugeln 10 und der Druckring 3 entgegen der Kraft der Federn 11 in Fig. 1 nach rechts aus, so daß die Kugeln 10 außer Eingriff mit der axial gerichteten Verzahnung 2a kommen, womit die Drehmoment-Übertragung unterbrochen wird. Das Auswandern des Druckringes 3 kann durch geeignete Mittel abgefühlt werden, um z. B. die Antriebsmaschine abzuschalten und die Ursache für das Überschreiten des eingestellten Grenzdrehmomentes beseitigen zu können.

Durch den Flansch 1b als Anschlag und die Abstimmung der Länge der Einstellmutter 5 ist deren Weg in Richtung auf die Federn 11 so begrenzt, daß die Federn nicht zu stark vorgespannt werden können.

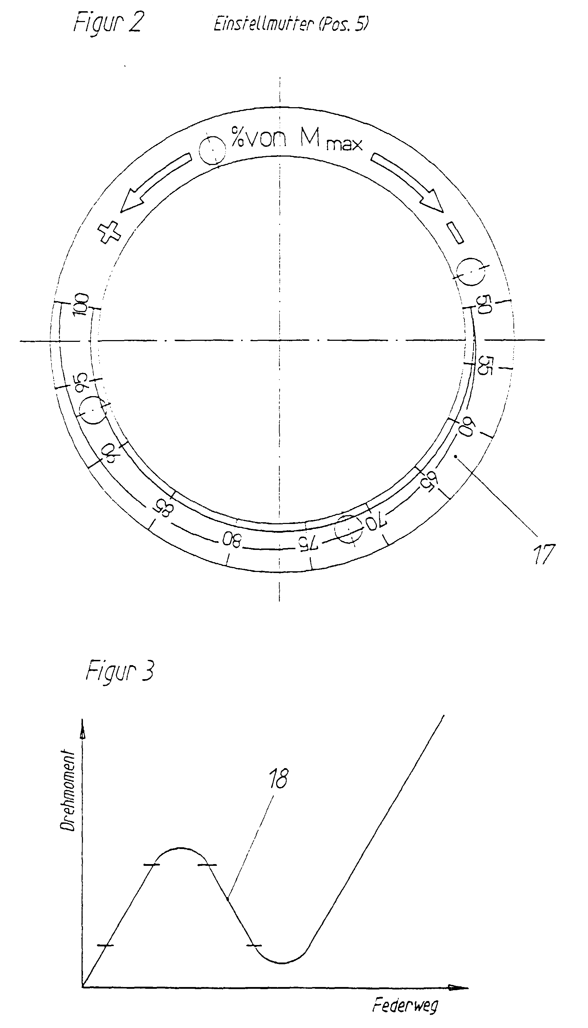

Durch den zweiten Anschlag, z.B. den Sprengring 13 ist der Verstellweg der Einstellmutter 5 von den Federn 11 weg ebenfalls begrenzt. Dadurch wird sichergestellt, daß nur der absteigende Ast 18 (Figur 3) der Federkennlinie der Tellerfedern 11 ausgenutzt wird.

Soll das maximale Drehmoment beim Betreiber oder auch schon beim Hersteller verändert werden, so genügt es, die Zahl der Tellerfeder-Scheiben 11 und der Ausgleichsscheiben 14 zu verändern, indem anstelle einer entnommenen Tellerfeder 11 eine Ausgleichsscheibe 14 eingelegt wird und umgekehrt. Auf jeden Fall muß aber die Summe der Tellerfedern 11 und Ausgleichsscheiben 14 für eine einmal festgelegte Kupplungsgröße im Hinblick auf die Lage der Anschläge, z.B. des Flansches 1b und des Sprengringes 13 für den Verstellweg der Einstellmutter 5 gleich bleiben, nach dem Ausführungsbeispiel gleich vier.

Die Nabe 1 oder ein mit ihr drehfest verbundener Teil als einer der Kupplungsteile oder die Einstellmutter 5 wird im Herstellerwerk bei der Justierung der neuen Kupplung mit einer Marke versehen, die den Referenz- oder Ausgangswert für die Einstellung des Drehmomentes mit Hilfe der Einstellmutter 5 darstellt. Dann kann unter Ablesung der auf der in Figur 1 rechten Stirnfläche der Einstellmutter 5 bzw. der Nabe 1, bzw. des mit dieser drehfest verbundenen Teils angebrachten Skala 17 das Grenzdrehoment durch Verdrehen der Einstellmutter 5 verändert oder bei Bedarf wieder auf den ursprünglichen Wert zurückgestellt werden, wobei die in Prozent des Maximaldrehmomentes gehaltene Skala abgelesen wird, das auf dem Typenschild der Kupplung angegeben oder als ein Vielfaches eines Grundbetrages multipliziert mit der Anzahl der eingelegten Tellerfedern 11 vermerkt sein kann.

Bei einer Veränderung des maximalen Drehmoments bei gleichbleibenden Abmessungen der Kupplung durch Veränderung der Anzahl der eingelegten Tellerfedern (wenigstens eine, höchstens z. B. vier) braucht daher als Anzeige für den Betreiber nur das Typenschild ausgewechselt zu werden, das das eingestellte Maximaldrehmoment angibt.

Ist die Kupplung ausgerastet, so wird z. B. der farbige O-Ring 12 bzw. ein umlaufender Farbstreifen sichtbar und zeigt somit unübersehbar an, daß der ausgerastete Zustand besteht.

### Bezugszeichenliste

- 1: Nabe mit
- 1a: Außengewinde und
- 1b: Flansch
- 2: Kupplungsglied mit
- 2a: axial gerichteter Verzahnung
- 3: Druckring
- 4: Zwischenring
- 5: Einstellmutter mit
- 5a: Innengewinde
- 6: Kugellager
- 7: Sicherungsring
- 8: Stützscheibe
- 9: Sicherungsring
- 10: Drehmoment-Übertragungskörper
- 11: Federn (Tellerfedern)
- 12: O-Ring bzw. Farbmarkierung
- 13: Sprengring
- 14: Ausgleichsscheiben
- 15: Verzahnungsring
- 15a: radial gerichtete Verzahnung
- 16: Feststellschraube
- 17: Skala
- 18: absteigender Ast der Federkennlinie der Tellerfedern 11

## Patentansprüche

1. Überlastkupplung mit je einem treibenden und einem angetriebenen Kupplungskörper (1 bzw. 2), die um die gleiche Achse drehbar angeordnet sind und die miteinander in drehmomentübertragender Weise verbunden sind durch Drehmomentübertragungskörper (10), die in Richtung der axial, radial oder kegelig zwischen den Kupplungskörpern verlaufenden Trennebene von einer über einen Druckring (3) wirkenden Teller-Federanordnung (11) eingedrückt werden in einander gegenüberstehende Ausnehmungen (2a, 15a) in den zwei Kupplungskörpern (1 bzw. 2), sowie mit einer Einstellmutter (5) zum Einstellen der Teller-Federanordnung (11) auf den Bereich der fallenden Federkennlinie (18),
dadurch gekennzeichnet,
daß der Weg der Einstellmutter (5) in Richtung zur Federanordnung (11) durch einen Anschlag (1b) und in Richtung von der Federanordnung (11) weg durch einen Anschlag (13) begrenzt ist, und daß die Länge der Einstellmutter (5) auf die Anschläge (1b und 13) abgestimmt ist.

2. Überlastkupplung nach Anspruch 1,
dadurch gekennzeichnet,
daß einer der Anschläge (1b) die Form einer flanschförmigen Verdickung des einen Kupplungskörpers hat.

3. Überlastkupplung nach Anspruch 1,
dadurch gekennzeichnet,
daß einer der Anschläge ein in eine umlaufende Nut des Kupplungskörpers (1) eingesetzter Sprengring (13) ist.

4. Überlastkupplung nach Anspruch 1 und/oder 2 oder 3,
dadurch gekennzeichnet,
daß wenigstens einer der Anschläge eine auf den einen Kupplungskörper (1) aufgeschraubte, gegen Verdrehung gesicherte Ringmutter ist.

5. Überlastkupplung nach einem der voranstehenden Ansprüche,
dadurch gekennzeichnet,
daß zwischen die Einstellmutter (5) und die TellerfederAnordnung (11) n Ausgleichsscheiben (14) eingelegt sind, wobei n = 0, 1, 2, ... ist.

6. Überlastkupplung nach Anspruch 5,
dadurch gekennzeichnet,
daß zwischen die Tellerfedern (11) und die Ausgleichsscheiben (14) ein Zwischenring (4) eingelegt ist.

7. Überlastkupplung nach Anspruch 5 oder 6,
dadurch gekennzeichnet,
daß die Summe der Tellerfedern (11) und der Ausgleichsscheiben (14) konstant ist.

8. Überlastkupplung nach Anspzuch 7,
dadurch gekennzeichnet,
daß die Summe der Tellerfedern (11) und Ausgleichsscheiben (14) vier beträgt.

9. Überlastkupplung nach einem der vorhergehenden Ansprüche,
dadurch gekennzeichnet,
daß auf dem die Einstellmutter (5) tragenden Kupplungskörper (1) oder einem drehfest mit diesem verbundenen Teil eine bei der Justierung festgelegte Marke angebracht, z. B. eingeschlagen ist.

10. Überlastkupplung nach Anspruch 9,
dadurch gekennzeichnet,
daß die Einstellmutter (5) auf der der Marke zugewandten Seite eine Skala (17) trägt.

11. Überlastkupplung nach einem der Ansprüche 1 bis 8,
dadurch gekennzeichnet,
daß auf der Einstellmutter (5) eine bei der Justierung festgelegte Marke angebracht, z.B. eingeschlagen ist.

12. Überlastkupplung nach Anspruch 11,
dadurch gekennzeichnet,
daß der Kupplungskörper (1) oder ein mit diesem drehfest verbundenes Teil auf der der Marke zugewandten Seite eine Skala trägt.

13. Überlastkupplung nach Anspruch 10 oder 12,
dadurch gekennzeichnet,
daß die Skala in Prozent des Maximal-Drehmoments anzeigt.

14. Überlastkupplung nach einem der Ansprüche 1 bis 13,
dadurch gekennzeichnet,
daß die Einstellmutter (5) z. B. durch eine Schraube (16) feststellbar ist.

15. Überlastkupplung nach einem der vorhergehenden Ansprüche,
dadurch gekennzeichnet,
daß auf einem der Kupplungskörper (2) eine im eingerasteten Zustand der Kupplung z. B. vom Druckring (3) verdeckte Farbmarkierung (12) angebracht ist, die nach dem Ausrasten der Kupplung freiliegt.

16. Überlastkupplung nach Anspruch 15,
dadurch gekennzeichnet,
daß die Farbmarkierung aus einem in eine umlaufende Nut des einen Kupplungskörpers (2) eingelegten Ring (12), z.B. O-Ring besteht.

17. Überlastkupplung nach Anspruch 16,
dadurch gekennzeichnet,
daß die Farbmarkierung (12) aus einem auf einem der Kupplungskörper (2) angebrachten, umlaufenden Streifen besteht.

## Claims

1. Overload clutch with one driving and one driven member (1 and 2) respectively which are arranged rotatably round the same axis and are connected to one another in a torque-transmitting manner by torque-transmitting members (10) which are pressed in the direction of the parting plane, extending axially, radially or conically between the clutch members, of a spring washer arrangement (11) acting via a thrust collar (3) into mutually opposed recesses (2a, 15a) in the two clutch members (1 and 2) and with an adjusting nut (5) for adjusting the spring washer arrangement (11) to the region of the falling spring characteristic (18), characterized in that the path of the adjusting nut (5) toward the spring arrangement (11) is limited by a stop (1b) and from the spring arrangement (11) by a stop (13) and in that the length of the adjusting nut (5) is adapted to the stops (1b and 13).

2. Overload clutch according to Claim 1, characterized in that one of the stops (1b) has the form of a flange-shaped thickening of one clutch member.

3. Overload clutch according to Claim 1, characterized in that one of the stops is a snap ring (13) inserted into a peripheral groove in the clutch member (1).

4. Overload clutch according to Claim 1 and/or 2 or 3, characterized in that at least one of the stops is a ring nut which is screwed onto one clutch member (1) and is secured against rotation.

5. Overload clutch according to one of the preceding claims, characterized in that n compensating discs (14) are inserted between the adjusting nut (5) and the spring washer arrangement (11), wherein n = 0, 1, 2 ... .

6. Overload clutch according to Claim 5, characterized in that an intermediate ring (4) is inserted between the spring washers (11) and the compensating discs (14).

7. Overload clutch according to Claim 5 or 6, characterized in that the sum of spring washers (11) and compensating discs (14) is constant.

8. Overload clutch according to Claim 7, characterized in that the sum of spring washers (11) and compensating discs (14) is four.

9. Overload clutch according to one of the preceding claims, characterized in that a mark which is fixed during adjustment is arranged, for example is beaten in, on the clutch member (1) carrying the adjusting nut (5) or a part rotationally engaged therewith.

10. Overload clutch according to Claim 9, characterized in that the adjusting nut (5) carries a scale (17) on the side facing the mark.

11. Overload clutch according to one of Claims 1 to 8, characterized in that a mark which is fixed during adjustment is arranged, for example beaten in, on the adjusting nut (5).

12. Overload clutch according to Claim 11, characterized in that the clutch member (1) or a part rotationally engaged therewith carries a scale on the side facing the mark.

13. Overload clutch according to Claim 10 or 12, characterized in that the scale displays in percentages of the maximum torque.

14. Overload clutch according to one of Claims 1 to 13, characterized in that the adjusting nut (5) can be fixed, for example, by a screw (16).

15. Overload clutch according to one of the preceding claims, characterized in that a coloured marking (12) which is concealed, for example, by the thrust collar (3) in the engaged state of the clutch and is exposed after disengagement of the clutch is arranged on one of the clutch members (2).

16. Overload clutch according to Claim 15, characterized in that the coloured marking consists of a ring (12), for example O-ring, inserted in a peripheral groove of one clutch member (2).

17. Overload clutch according to Claim 16, characterized in that the coloured marking (12) consists of a peripheral strip arranged on one of the coupling members (2).

## Revendications

1. Accouplement anti-surcharge comportant respectivement un corps d'accouplement menant et un corps d'accouplement mené (1 ou 2) qui sont agencés en rotation autour du même axe et qui sont reliés l'un à l'autre de manière à transmettre un couple de rotation par des corps de transmission de couple de rotation (10) qui sont enfoncés en direction du plan de séparation s'étendant axialement, radialement ou coniquement entre les corps d'accouplement par un agencement de disques-ressorts (11) agissant via un anneau de pression (3) dans des évidements (2a, 15a) en vis-à-vis l'un de l'autre dans les deux corps d'accouplement (1 ou 2), et comportant un écrou de réglage (5) pour régler l'agencement de disques-ressorts (11) à la zone de la courbe caractéristique descendante (19) des ressorts, caractérisé en ce que la course de l'écrou de réglage (5) est limitée en direction de l'agencement de ressorts (11) par une butée (1b) et en éloignement de l'agencement de ressorts (11) par une butée (13), et en ce que la longueur de l'écrou de réglage (5) est ajustée aux butées (1b et 13).

2. Accouplement anti-surcharge selon la revendication 1, caractérisé en ce que l'une des butées (1b) présente la forme d'un épaississement sous forme d'une bride de l'un des corps d'accouplement.

3. Accouplement anti-surcharge selon la revendication 1, caractérisé en ce que l'une des butées est un jonc (13) mis en place dans une gorge périphérique du corps d'accouplement (1).

4. Accouplement anti-surcharge selon l'une quelconque des revendications 1, 2 et 3, caractérisé en ce que l'une au moins des butées est un écrou annulaire vissé sur l'un des corps d'accouplement (1) et bloqué à l'encontre d'une rotation.

5. Accouplement anti-surcharge selon l'une quelconque des revendications précédentes, caractérisé en ce qu'il est prévu entre l'écrou de réglage (5) et l'agencement de disques-ressorts (11) n disques de compensation (14), avec n = 0, 1, 2, ... .

6. Accouplement anti-surcharge selon la revendication 5, caractérisé en ce qu'un anneau intermédiaire (4) est mis en place entre les disques-ressorts (11) et les disques de compensation (14).

7. Accouplement anti-surcharge selon l'une ou l'autre des revendications 5 et 6, caractérisé en ce que la somme des disques-ressorts (11) et des disques de compensation (14) est constante.

8. Accouplement anti-surcharge selon la revendication 7, caractérisé en ce que la somme des disques-ressorts (11) et des disques de compensation (14) s'élève à quatre.

9. Accouplement anti-surcharge selon l'une quelconque des revendications précédentes, caractérisé en ce qu'on appose, par exemple par matriçage, sur le corps d'accouplement (1) portant l'écrou de réglage (5) ou sur une partie reliée solidairement en rotation à celui-ci, un marquage déterminé lors de l'ajustement.

10. Accouplement anti-surcharge selon la revendication 9, caractérisé en ce que l'écrou de réglage (5) porte une échelle (17) sur la face orientée vers le marquage.

11. Accouplement anti-surcharge selon l'une quelconque des revendications 1 à 8, caractérisé en ce que l'on appose, par exemple par matriçage sur l'écrou de réglage (5) un marquage déterminé lors de l'ajustement.

12. Accouplement anti-surcharge selon la revendication 11, caractérisé en ce que le corps d'accouplement (1) ou une partie reliée solidairement en rotation à celui-ci porte une échelle sur la face orientée vers le marquage.

13. Accouplement anti-surcharge selon l'une ou l'autre des revendications 10 et 12, caractérisé en ce que l'échelle affiche en pourcentage du couple de rotation maximum.

14. Accouplement anti-surcharge selon l'une quelconque des revendications 1 à 13, caractérisé en ce que l'écrou de réglage (5) peut être fixé par exemple par une vis (16).

15. Accouplement anti-surcharge selon l'une quelconque des revendications précédentes, caractérisé en ce qu'il est prévu sur l'un des corps d'accouplement (2) un marquage coloré (12) qui est recouvert à l'état enclenché de l'accouplement par exemple par l'anneau de pression (3), et qui est libre après le déclenchement de l'accouplement.

16. Accouplement anti-surcharge selon la revendication 15, caractérisé en ce que le marquage coloré est constitué par un anneau (12), par exemple un joint torique mis en place dans une gorge périphérique de l'un des corps d'accouplement (2).

17. Accouplement anti-surcharge selon la revendications 16, caractérisé en ce que le marquage coloré (12) est constitué par un ruban périphérique agencé sur l'un des corps d'accouplement (2).
